Europäisches Patentamt

European Patent Office

Office européen des brevets

(19)

(11) **EP 1 234 739 B1**

(12) **EUROPEAN PATENT SPECIFICATION**

(45) Date of publication and mention
of the grant of the patent:
**19.10.2005 Bulletin 2005/42**

(51) Int Cl.⁷: **B60T 1/10**, B60T 13/66,
B60T 13/74, B60T 7/12

(21) Application number: **01000457.0**

(22) Date of filing: **13.09.2001**

(54) **A system and method for braking a towed vehicle**

Bremssystem und -methode zum Bremsen eines Anhängers

Système et méthode de freinage d'une remorque

(84) Designated Contracting States:
**DE FR GB**

(30) Priority: **28.09.2000 US 672441**

(43) Date of publication of application:
**28.08.2002 Bulletin 2002/35**

(73) Proprietor: **Ford Global Technologies, LLC**
**Dearborn, MI 48126 (US)**

(72) Inventors:
• **Napier, Steven Lee**
**Canton, MI 48188 (US)**
• **Crombez, Dale Scott**
**Livonia, MI 48150 (US)**

(74) Representative: **Messulam, Alec Moses**
**A. Messulam & Co. Ltd.,**
**43-45 High Road**
**Bushey Heath, Bushey, Herts WD23 1EE (GB)**

(56) References cited:
**EP-A- 1 081 005**    **US-A- 5 615 930**
**US-A- 6 155 365**    **US-B1- 6 275 763**

• **PATENT ABSTRACTS OF JAPAN vol. 1996, no.**
**08, 30 August 1996 (1996-08-30) & JP 08 105466**
**A (SAWAFUJI ELECTRIC CO LTD), 23 April 1996**
**(1996-04-23)**

## Description

This invention relates to a system and method for braking a towed vehicle or conveyance and more particularly, to a system and method for braking a towed vehicle which provides improved braking stability, efficiency and performance.

Automotive vehicles are often used to tow or haul conveyances such as other automotive vehicles, trailers, caravans, boats, and other items. Vehicles and trailers that are towed by a car or truck often represent a relatively large towing load and can become unstable and/or cause situations that frustrate the driver or operator of the towing vehicle.

Particularly, on downgrades, the towed vehicle may tend to roll faster than the towing vehicle. In these types of situations, the towed vehicle may significantly encumber the braking system of the towing vehicle.

For example, the towed vehicle may undesirably and significantly lengthen braking distance and may cause significant and premature wear to the brakes of the towing vehicle. Moreover, the towed trailer or vehicle may further undesirably swing to one side or the other due to the geometry of the single point hitch.

Various efforts and systems have been implemented to correct the foregoing conditions. For example and without limitation, some experienced drivers learn to sense or anticipate these conditions and correct these conditions with the steering wheel and/or by adding stabilizing bars to prevent swinging of the towed trailer or vehicle. While such driver-performed manoeuvres may be effective to reduce swinging under certain conditions, these manoeuvres cannot significantly reduce braking distance or wear to the towing vehicle's braking system.

Other efforts include trailer brakes which may be installed on a trailer and which are particularly effective in straightening and stabilizing the path of the trailer. For example, a surge type braking system can be installed on a trailer which hydraulically or mechanically actuates trailer brakes in response to pressure on the tow "ball" or hitch. Other systems include electrically actuated braking systems which are installed on trailers. However, these systems and methods are adapted for use only with trailers and cannot be used with other automotive vehicles that may be desirably towed. Moreover, these systems and methods are energy inefficient and cause excessive wear to the trailer brakes.

Japanese patent 08105466 discloses a trailer having a braking system consisting of an electrical retarder. When the driver desires the trailer to be braked, the excitation or field coils of the retarder are supplied by power generated in the retarder, creating a load on the trailer axle causing it to slow down.

It is an object of the invention to provide a system and method for braking a towed conveyance which overcomes at least some of the disadvantages of prior systems, methods and strategies.

According to a first aspect of the present invention there is provided system for braking a trailer which includes an axle assembly and which is being towed by a vehicle, said system comprising at least one electric machine which is coupled to said axle assembly, a sensor which is effective to measure an attribute of said trailer and to generate a first signal representing said measured attribute and a controller which is communicatively coupled to said at least one electric machine and said sensor, said controller being effective to receive said first signal and, based upon said first signal, to selectively communicate a second signal to said at least one electric machine, said second signal being effective to cause said at least one electric machine to apply a regenerative braking torque to said axle assembly, thereby braking said trailer and generating electrical energy.

The system may further comprise a battery which is operatively coupled to said at least one electric machine and which is effective to receive said generated electrical energy, thereby recharging said battery.

The system may further comprise a battery controller which is operatively coupled to said controller and to said battery and which is effective to monitor a state of charge of said battery and to selectively discharge said battery if said state of charge exceeds a certain predetermined value.

The system may further comprise at least one load resistor which is operatively coupled to said battery and which is used to selectively discharge said battery.

The system may further comprise an auxiliary power source which is operatively coupled to said battery and which selectively receives electrical power from said battery.

The attribute measured by the sensor may be a yaw rate of said trailer.

The controller may be further effective to selectively communicate a third signal to said at least one electric machine when said trailer is at parking speeds, said third signal being effective to cause said at least one electric machine to apply a positive torque to said axle assembly, thereby assisting in parking said trailer.

Advantageously, there may be two independent axles each being arranged to be driven by a respective electric machine and controlled by the controller, the third signal being applied to the at least one of the electric machines to assist with parking. The third signal may cause rotation of one axle in one direction and rotation of the other axle in an opposite direction or maintain one axle stationary while rotating the other of the two axles.

Said at least one electric machine may be a combined motor/generator.

According to a second aspect of the invention there is provided a method comprising the steps of providing a motor/generator, operatively coupling said motor/generator to an axle assembly of the towed vehicle, sensing a braking condition and selectively providing a negative torque to said axle assembly in response to said sensed braking condition so as to assist in braking said towed vehicle and to generate electrical power from the motor/generator.

The method may further comprise the steps of monitoring a yaw rate of said towed vehicle and selectively providing said negative torque to said axle assembly based upon said yaw rate.

The method may further comprise the steps of operatively coupling a battery to said motor/generator and utilizing said generated electrical power to charge said battery.

The method may further comprise the steps of sensing when said towed vehicle is at a parking speed and selectively providing a positive torque to said towed vehicle, effective to assist in parking said vehicle.

The second braking system may comprise a driver-operated control which generates said braking signal, wherein said first braking system includes a controller, and wherein said controller is communicatively coupled to said driver-operated control and is effective to receive said braking signal and to selectively activate said first braking system in response to said received braking signal.

The first braking system may include a first hydraulic braking assembly and the braking signal may comprise a voltage signal which is received by said first hydraulic braking assembly, effective to activate said hydraulic braking assembly, thereby providing said braking force to said first vehicle.

The braking signal may comprises a braking lamp signal which is communicated over a bus, and the first electronic braking system may include a controller which is communicatively coupled to said bus and is effective to receive said braking lamp signal and to selectively activate said braking system in response to said received braking lamp signal.

The first braking system may comprise an electromechanical braking system and the braking signal may comprise a voltage signal which is received by said electromechanical braking system, effective to activate said electromechanical braking system, thereby providing said braking force to said first vehicle.

The first braking system may comprise at least one electrically actuated parking brake and the braking signal may comprise a voltage signal which is received by said at least one electrically actuated parking brake, effective to activate said at least one electrically actuated parking brakes, thereby providing said braking force to said first vehicle.

The invention will now be described by way of example with reference to the accompanying drawing of which:-

Figure 1 is a schematic representation of a motor vehicle and trailer in accordance with the present invention;

Figure 2 is a schematic representation of a motor vehicle and trailer in accordance with a second embodiment of the present invention;

Figure 3 is a schematic representation of a motor vehicle and trailer in accordance with a third embodiment of the present invention;

Figure 4 is a block diagram of a control strategy used by the method shown in Figure 3.

Figure 5 is a block diagram of a system for braking a towed trailer in accordance with the present invention.

Figure 6 is a block diagram of a control strategy implemented by the system shown in Figure 5.

Figure 7 is a block diagram illustrating an electronic controller forming part of the system shown in Figure 5.

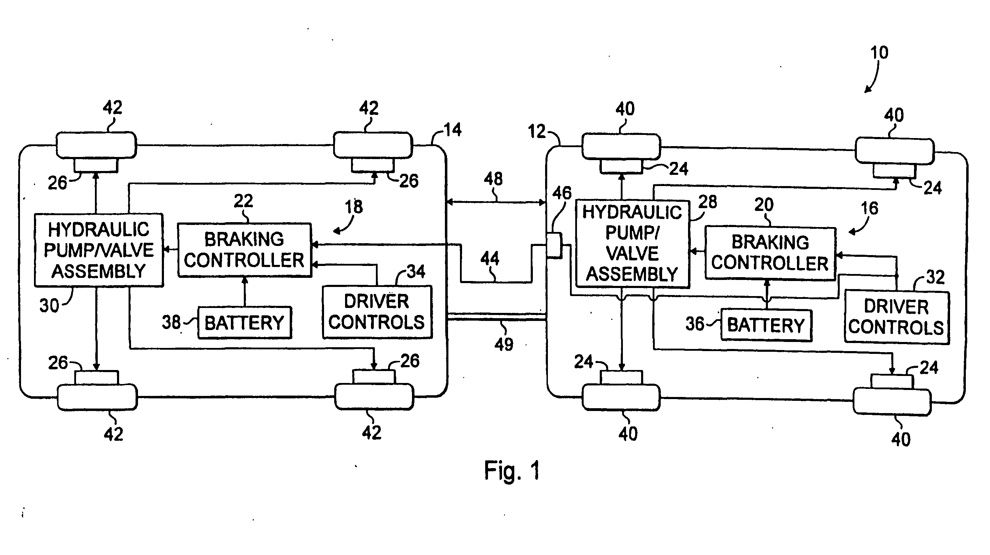

Referring now to Figure 1, there is shown a system and method 10 for braking a towed vehicle 14 in accordance with a first embodiment of the present invention.

The vehicle 14 is a conventional automotive vehicle which is being towed by a second conventional automotive vehicle 12. The vehicles 12, 14 respectively include conventional electronically controlled braking systems 16, 18.

The braking systems 16, 18 each respectively includes an electronic braking controller 20, 22, a number of friction braking assemblies 24, 26, and hydraulic pump/valve assemblies 28, 30. The braking assemblies 24, 26 are conventional friction type braking assemblies, such as a drum or disc type assemblies, which apply braking forces to wheels 40, 42.

The braking assemblies 24, 26 are operatively coupled to hydraulic pump/valve assemblies 28, 30, which selectively activate the brakes 24, 26.

The assemblies 28, 30 each include a source of pressurized fluid and several solenoid type valves which can be selectively energized and de-energized to control the individual brake assemblies 24, 26.

Although the specific embodiment relates to the use of electronic/hydraulic braking systems, the present invention can be used with various other types of braking systems.

The controllers 20, 22 are respectively coupled to driver-operated controls 32, 34 (e.g. a brake pedal), hydraulic assemblies 28, 30, and sources of electrical power (e.g., a batteries) 36, 38.

The controllers 20, 22 are conventional electronic braking controllers which respectively receive braking control signals from driver-operated controls 32, 34 and based upon the value or magnitude of the received braking control signals, controllers 20, 22 determine the amount of braking torque to be applied to each of wheels 40, 42.

In alternate embodiments, controllers 20, 22 may be further coupled to conventional sensors, such as wheel speed and slip sensors which provide additional data that may be used to determine the amount of braking torque to be applied to wheels 40, 42 by braking assemblies 24, 26.

Once controllers 20, 22 determine the amount of torque to be applied to wheels 40, 42, controllers 20, 22 cause voltage signals to be supplied to assemblies 28, 30, effective to activate the braking assemblies 24, 26 in a desired manner.

The controller 22 is further communicatively coupled to the driver controls 32 of the vehicle 12 by use of an auxiliary bus 44 which is selectively connected to a terminal 46 which is externally mounted on the vehicle 12 and which is operatively coupled to the driver controls 32.

In an alternate embodiment, the terminal 46 is directly coupled to the controller 20, which transmits the driver-operated control signals to terminal 46.

The vehicles 12, 14 are further communicatively coupled together by an electronic wire bundle or bus assembly 48 which communicates conventional left turn, right turn and stop lamp or "brake light" signals from vehicle 12 to vehicle 14.

The bus 44 can form part of the bus assembly 48 or as shown can be separately connected as and independent link.

The controller 22 selectively operates within a "tow mode" which is discussed more fully and completely below.

The controller 22 is set to "tow mode" by use of a user-operated electrical control or switch located within vehicle 14 alternatively the controller 22 can be programmed to automatically enter into "tow mode" when vehicle 14 is not "running" (e.g., the engine is not running) and is in a "neutral" gear.

In operation, vehicle 14 is physically connected to vehicle 12 by use of a conventional trailer hitch or towing assembly 49. After the vehicles 12, 14 are physically coupled together, the two busses 44 and 48 are connected between the vehicles 12, 14 to electrically and communicatively connect the vehicle 14 to vehicle 12.

The controller 22 is then set to "tow mode" placing the controller 22 in a "sleep" or "at rest" state until it receives a braking control signal from the bus 44.

Upon receiving the braking control signal from the bus 44, the controller 22 is activated or "awakens" and processes the received braking control signal in a conventional manner. That is to say in the same manner in which it would process signals from the driver-operated controls 34. After determining a desired braking force based upon the control signal the controller 22 then provides a voltage signal to hydraulic assembly 30.

This is achieved by the controller 22 causing a certain amount of electrical power to be transferred from battery 38 to pump assembly 30.

This activates braking the assemblies 26 and slows the towed vehicle 14. The magnitude of the voltage signal provided to assembly 30 is a predetermined percentage of the magnitude of the voltage signal provided by controller 20 to hydraulic assembly 28.

In this manner, the method 10 selectively activates the braking system 18 of towed vehicle 14 to supplement the braking provided by vehicle 12, thereby assisting vehicle 12 in braking vehicle 14.

The method 10 utilizes existing hardware (i.e., braking system 18) to improve braking stability and efficiency. Moreover, method 10 significantly shortens the braking distance of vehicles 12, 14, and prevents premature wear to the brakes 24 of vehicle 12.

In an alternate embodiment, the braking control signal transmitted over the bus 44 can be communicated to other systems of vehicle 14 such as traction control and/or stability systems which can be used to control braking assemblies 26 and/or the speed of wheels 42 in a manner which desirably augments the braking force provided by the towing vehicle 12.

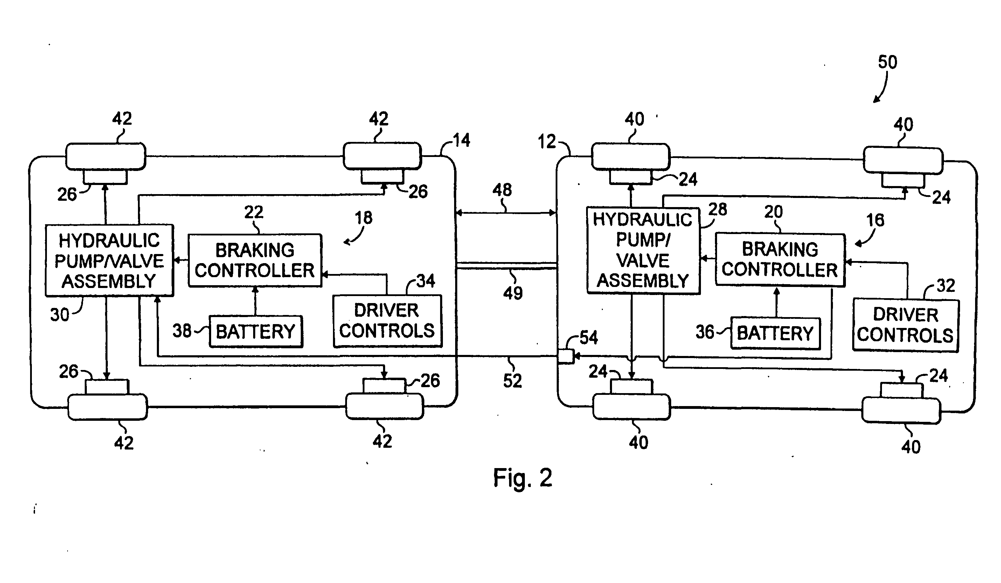

Referring now to Figure 2, there is shown a system and method 50 which is performed according to a second embodiment of the present invention. The system and method 50 is substantially identical to the system and method 10 with the following exceptions.

The bus 44 and terminal 46 have been replaced with a high voltage electrical bus 52 and terminal 54. The bus 52 is directly connected to pump assembly 30 of vehicle 14 and terminal 54 is connected directly to the braking controller 20 of vehicle 12.

In this embodiment, the controller 20 may be selectively set or programmed to a "towing mode" (e.g. by use of a conventional switch). While in the "towing mode", controller 20 communicates an electrical power signal to pump assembly 30 of vehicle 14 in response to receipt of braking control signals from controls 32.

The braking controller 20 directly transfers voltage from the battery 36 to the hydraulic assembly 30 of vehicle 14, effective to activate brakes 26.

The magnitude of the power signal transferred to assembly 30 is determined by controller 20 and is proportional to the braking control signal received from controls 32. Alternatively, the magnitude of the power signal communicated to vehicle 14 can be based upon a deceleration reading taken by a deceleration sensor located within one of the controllers 20, 22.

The controller 22 is not active in the braking process, and remains in a de-activated condition and does not have to be programmed to operate in the previously described "tow mode".

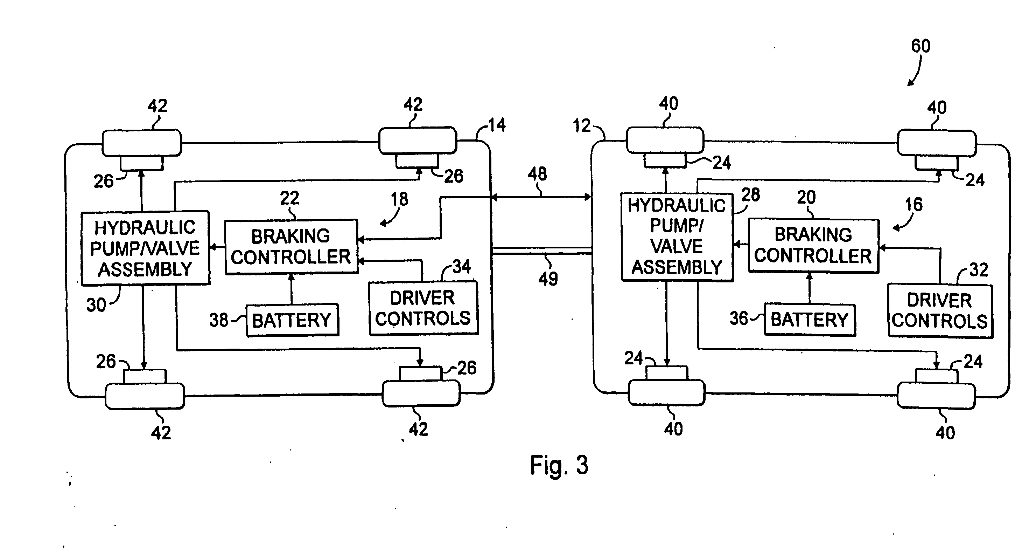

Referring now to Figure 3, there is shown a system and method 60 for braking the towed vehicle 14 which is performed according to a third embodiment of the present invention.

The system and method 60 is similar to the system and method 10 with the exception that bus 44 and terminal 46 have been eliminated and the braking controller 22 is communicatively coupled to a bus 48. In particular the "stop lamp" activation signal transmitted by the bus 48 is directly communicated to the controller 22.

In this embodiment, the controller 22 uses the existing "stop lamp" or "brake light" signal from the vehicle 12 to activate and control the braking of vehicle 14.

The controller 20 selectively operates within a "tow mode" which can be set by use of a user-operated electrical control or switch located within vehicle 14 or the controller 22 is programmed to automatically enter into a "tow mode" when vehicle 14 is not running and is in a "neutral" gear, or by use of other sensed vehicle attributes or signals.

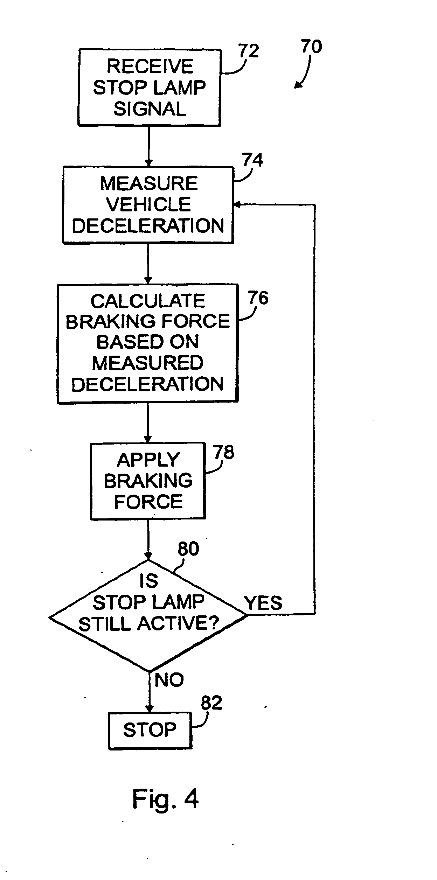

When the controller 22 is operating within "tow mode", it operates in accordance with the method or braking strategy shown in Figure 4.

The braking strategy 70 of Figure 4 begins with step 72, when controller 22 receives a stop lamp or brake light signal from bus 48. Upon receiving the signal from bus 48, controller 22 is activated or "wakes" and immediately measures and/or monitors the deceleration of vehicle 14 (e.g., by use of a conventional accelerometer), as shown in step 74.

In step 76, controller 22 calculates or determines the brake force to be applied by brake assemblies 26 as a function of the measured deceleration. The magnitude of the calculated braking force is proportional to the measured deceleration.

In step 78, the controller 22 sends a voltage signal to assembly 30 which is effective to activate brakes 26 in the desired manner. the controller 22 continues to monitor the stop lamp signal to determine if it is still active, as shown in step 80. The controller 22 repeats steps 74 - 80 as long as the stop lamp signal is active.

Once the stop lamp signal is deactivated, strategy 70 ends, as shown in step 82.

It should be appreciated that the architecture described in systems and methods 10, 50 and 60 is just illustrative and alternative types of braking systems and arrangements could be used. For example, the hydraulic braking system of vehicle 14 could be replaced with an electromechanical braking system which can be selectively actuated in a substantially similar manner by use of a variety of braking signals that are communicated from vehicle 12 and/or braking system 16 (i.e., by use of a braking control signal, a voltage signal or a brake light signal). Alternatively the vehicle 14 may include electrically actuated parking brakes which can be selectively actuated in a substantially similar manner by use of a variety of braking signals that are communicated from vehicle 12.

Moreover, the systems and methods 10, 50 and 60 may utilise various other parameters (e.g., the speed, acceleration and yaw rate of the respective vehicles) when determining the data and/or power signals which are transferred from braking system 16 to braking system 18 and how the braking system 18 reacts to and/or utilizes the transferred signals to brake vehicle 14.

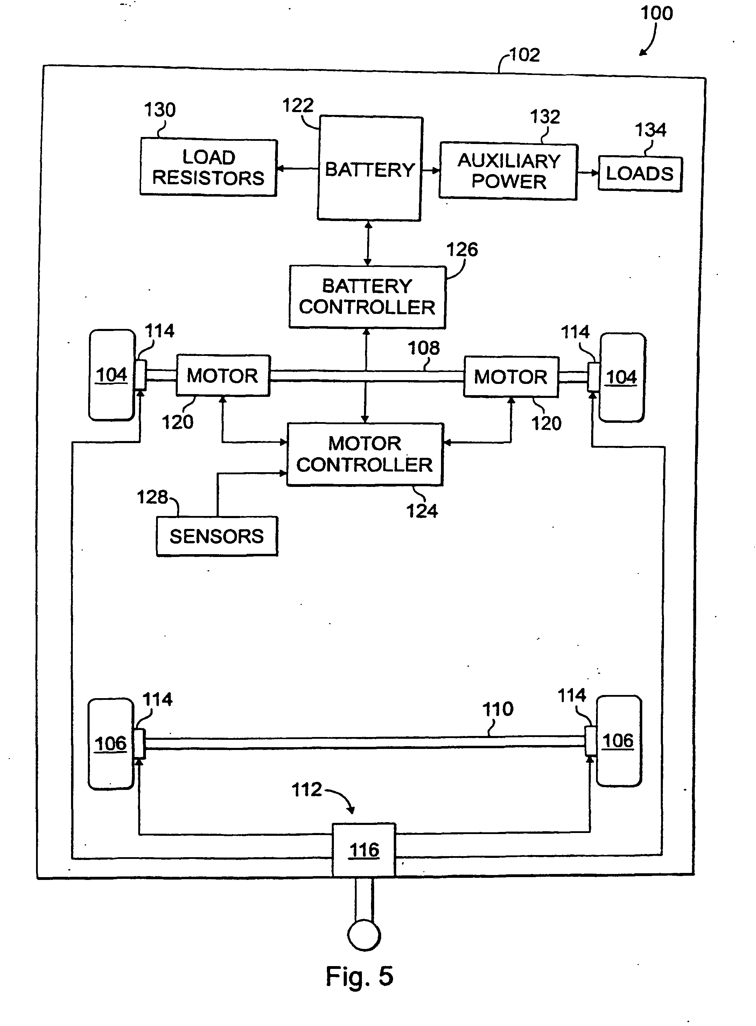

Referring now to Figure 5, there is shown a system 100 for braking a towed trailer 102 which is made in accordance with a further embodiment of the invention.

The trailer 102 includes a friction braking system 112, and several wheels 104, 106 which are operatively and rotably coupled to axle assemblies 108, 110. The friction braking system 112 is a conventional mechanically, electrically and/or hydraulically actuated friction braking system including several drum or disk type friction braking members 114 and an actuating assembly 116, which may comprise a pressure responsive actuator (e.g., in the case of a mechanical or hydraulic system) or a controller or other electrical braking signal source (e.g., in the case of an electrical system).

While the following discussion describes system 100 as implemented on trailer 102, it should be appreciated that system 100 may be adapted for use on various other types of trailers, vehicles and conveyances.

System 100 includes a motor controller 124, a pair of electric machines or motor/generators 120, a conventional electrical energy storage device or battery 122, a battery controller 126, and sensors 128. Controller 124 is communicatively coupled to sensors 128, to motor/generators 120, and to battery controller 126. Battery 122 is communicatively coupled to battery controller 126.

Controller 124 receives signals and/or commands generated by sensors 128, and processes and utilizes the received signals to determine the amount of braking torque which is to be provided to the wheels 104 by motor/generators 120, and causes motor/generators 120 to cooperatively provide the desired torque to the wheels 104.

The electric machines 120 are conventional electric motor-generator units. Such electric motor/generators 120 operatively coupled to an axle assembly are known and are of conventional construction.

The motor/generators 120 selectively provide braking torque to the axle assembly 108 of trailer 102, thereby braking trailer 102 and providing regenerative electrical power to battery 122.

In particular the motor/generators 120 perform a "regenerative" type braking function by selectively applying a negative torque to axle assembly 108, thereby converting the kinetic energy of trailer 102 into electrical energy which is communicated to battery 122 through motor controller 124 and battery controller 126 and which is used to recharge battery 122 and to electrically power auxiliary power source 132 and electrical loads 134 (e.g., battery 122 supplies power to auxiliary power source 132 which operates conventional electrical loads and accessories 134 within trailer 102).

The motor/generators 120 could be replaced by a single motor generator unit.

The motor controller 124 and the battery controller 126 each include one or more microprocessors or controllers as well as other chips and integrated circuits which cooperatively control the operation of system 100.

The controller 124 comprises a motor controller which controls the operation of motors 120, and the controller 126 comprises a battery controller which controls the operation of battery 122.

The controllers 124, 126 may either each comprise a separate controller or may be embodied within a single controller, chip, microprocessor or device.

The controller 124 is effective to determine the total amount of braking torque which is to be provided or delivered to axle assembly 108 and/or wheels 104 and to partition or divide the total torque between each motor 120 (e.g., based on yaw rate values).

It will be appreciated that the axle assembly could comprise a single axle or two separate axles that can be driven separately by the motors 120. This would allow the axles be rotated in opposite directions or only one axle to be rotated while maintaining the other stationary if this is required to assist with parking of the trailer.

The controller 126 is effective to monitor and/or estimate the state of charge of battery 122 and to selectively discharge battery 122 by use of conventional load resistors 130 if the state of charge of battery 122 exceeds a certain predetermined value.

The system 100 may alternatively includes a system controller which is communicatively coupled to the controllers 124, 126 and to sensors 128.

In this alternate embodiment, the system controller handles input and output functions, calculates necessary parameters and desired retarding forces and issues torque commands. The system controller may also control start up and shut down sequences, issue warning messages, and store diagnostic data.

The sensors 128 comprise one or more conventional and commercially available sensors which measure and/or acquire information pertaining to attributes of trailer 102.

In particular the sensors 128 include a conventional yaw rate sensor adapted to estimate and/or determine the lateral acceleration of trailer 102, and one or more brake sensors which are adapted to sense the braking of trailer 102.

The sensors 128 generate one or more signals to the controller 124 based upon these measured and/or estimated values.

Alternatively the sensors 128 may be individual wheel speed sensors which are used to calculate yaw rate by the use of a mathematical algorithm.

In operation, the conventional remotely operated friction brake system 112 is augmented by use of motor/generators 120 that selectively provide a electrically controlled, regenerative braking force. The control for the braking force is derived by controller 124 from measured vehicle parameters (e.g., yaw rate) without requiring driver intervention.

If excessive trailer yaw rate is detected by yaw rate sensor 128, and/or by interaction with other vehicle systems or by calculations from other system sensors (e.g., wheel speed sensors)the controller 124 calculates the appropriate retarding force in excess of the retarding force provided by the friction brakes, if any.

The controller 124 then issues a command to the motors 120 to provide the appropriate retarding force with the resulting electrical energy being stored by the battery 122.

As the measured yaw rate is brought within a predetermined target range, the retarding force provided by motors 120 is gradually removed.

It should be appreciated that motor/generators 120 can be used in any braking situation even in the absence of excessive yaw rate. Fur example the use of the motor/generators 120 is prolonged to provide maximum regenerative capability.

Several maintenance functions are performed constantly along with the foregoing strategy. For example, the battery controller 126 constantly monitors the state of charge of battery 122 and,if the state of charge exceeds a predetermined value, the charge can be lowered by use of "bleed" or load resistors 130.

If the state of charge falls below a certain predetermined value, a low level of charging is performed by symmetric generation at a relatively low level.

Additionally, the controller 124 constantly checks for over current, under voltage, signals that are out of range, and logic checks on reasonable outputs. For example the controller 124 may determine whether retarding for stability is longer than a predetermined limit, whether retarding has exceeded a predetermined limit, whether the state of charge is out of a predetermined range, whether the direction of retarding does not match direction of yaw, and whether rate of change of retarding does not match rate of change of yaw.

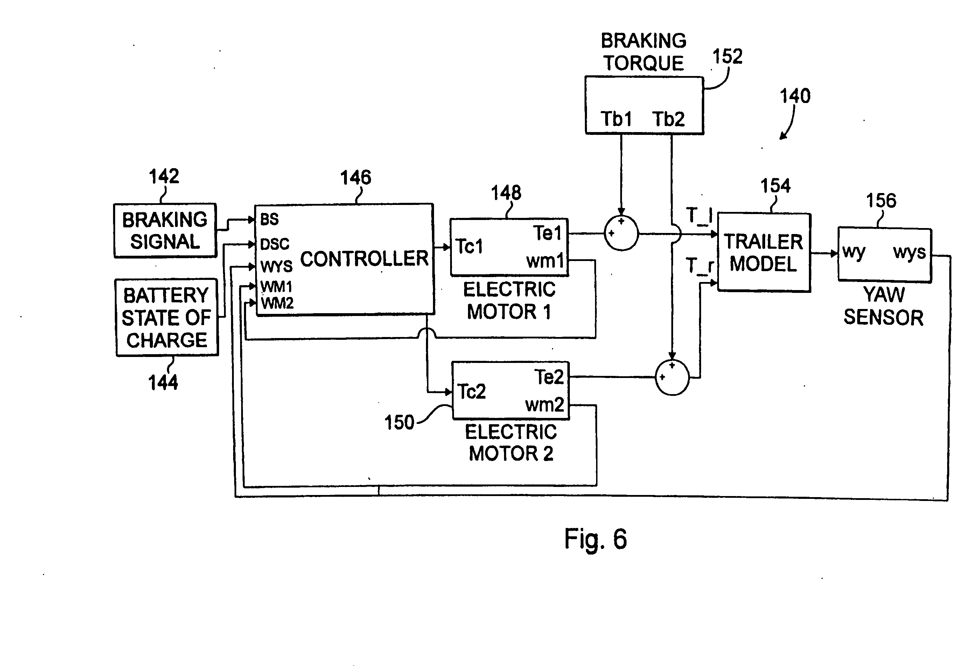

Control strategies for system 100 can be approached in several ways depending on the physical and functional implementation of the system. Figure 6 illustrates a schematic diagram 140 of a control strategy which can be implemented with system 100 and which assumes no direct communication with the towing vehicle other than the conventional communication that is required to operate trailer brakes and stop lights.

This configuration has the advantage that it is compatible with any towing vehicle and can be sold completely independently or as an add-on to existing trailers.

In control system 140, block 142 represents the braking signal, block 144 represents the state of charge of battery 122, block 146 represents controller 124, blocks 148, 150 represent motors 120, block 152 represents the braking torque provided by friction braking members 114, block 154 represents the trailer 102, and block 156 represents the yaw sensor 128.

The speed of electric motors 148, 150 (i.e., wm1 and wm2) is measured and is used in the control loop to generate required torque commands (Tc1 and Tc2) and/or to estimate the yaw rate.

The braking signal (BS) and battery state of charge signal (BSC) are also used in the control logic. As shown, the torque provided by the electric motors (i. e., Te1 and Te2) are added to the torque provided by braking members 152 (i.e., Tb1 and Tb2) to comprise the total left and right braking force (T_l and T_r) that is provided to trailer model 154 (e.g., to each of wheels 104).

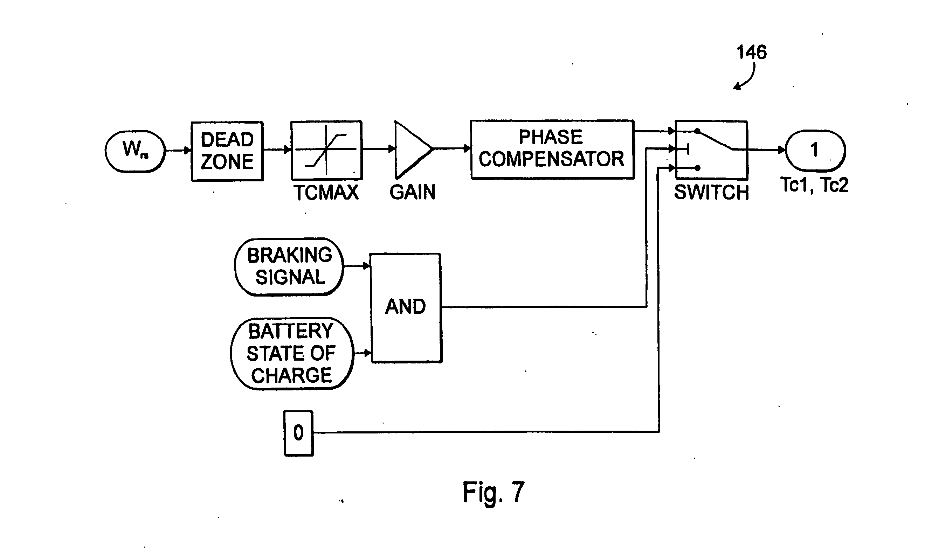

A representation of one embodiment of control block 146 is illustrated in Figure 7.

Control block 146 implements the following feedback control:

$$T_c = -K_p \frac{T_1 s + 1}{\alpha T_1 s + 1} \frac{T_2 s + 1}{\alpha T_2 s + 1} \omega_{rs} \qquad \text{(Eq. 1)}$$

where $K_P$ is the controller gain, $\omega_{rs}$ is the yaw rate, and $T_1, T_2, \alpha$ are parameters of the phase lead compensator.

The one/two link lead compensator is required to achieve the control design with good stability margin and response.

The controller model shown in Figure 7 also includes the dead zone block to make the system more robust to measurement noise, and a saturation block (i. e., Tcmax) to limit the undesirable transients from the torque command which could affect the system performance. In the considered control structure, the yaw control is active only when the brake signal is activated. Other applicable control schemes for use with the present invention could include but not be limited to: classic controllers with deterministic control laws, fuzzy logic, and neural networks.

A single motor architecture is inherently stable since any decelerating torque will tend to straighten the path of the vehicle and the trailer. In one non-limiting embodiment, each major component in system 100 (e. g. controller, electric machine) may also be subject to internal diagnostics and fault checks.

The torque may be selectively generated in a reverse or positive direction by the electric machines 120 when trailer 102 is at parking speeds.

In this case the torque is selectively applied through a one way (e.g., planetary) gear reduction such that the trailer can pull itself (and possibly the towing vehicle) backward into a parking location. In this way manoeuvring the trailer can be performed quickly and accurately by a relatively inexperienced operator, and with or without the aid of the towing vehicle. Manoeuvring without the towing vehicle requires only a fraction of the room required while the towing vehicle is attached.

The towing system 100 overcomes the drawbacks associated with prior systems while conserving energy, and stabilizing the trailer's path regardless of operator skill. System 100 provides the additional benefits of an auxiliary power source in the trailer; a source for jump-starting the engine of the tow vehicle; and a reduction of wear on trailer's friction brakes. Instead of being lost as friction heat, the kinetic energy of the trailer is regenerated and stored in the system battery. No separate power source is required to run the system since it will store energy that can be used in its operation.

It will be appreciated that various modifications may be made without departing from the scope of the invention.

**Claims**

1. A system (100) for braking a trailer (102) which includes an axle assembly (108) and which is being towed by a vehicle , **characterised in that** the system comprises at least one electric machine (120) which is coupled to said axle assembly (108), a least one sensor (128) which is effective to measure an attribute of said trailer (102) and to generate a first signal representing said measured attribute and a controller (124) which is communicatively coupled to said at least one electric machine (120) and said sensor (128), said controller (124) being effective to receive said first signal and, based upon said first signal, to selectively communicate a second signal to said at least one electric machine (120), said second signal being effective to cause said at least one electric machine (120) to apply a regenerative braking torque to said axle assembly (108) thereby braking said trailer (102) and generating electrical energy.

2. A system as claimed in claim 1 further comprising a battery (122) which is operatively coupled to said at least one electric machine (120) and which is effective to receive said generated electrical energy, thereby recharging said battery (122).

3. A system as claimed in claim 1 or in claim 2 in which the system further comprises a battery controller (126) which is operatively coupled to said controller (124) and to said battery (122) and which is effective to monitor a state of charge of said battery (122) and to selectively discharge said battery (122) if said state of charge exceeds a certain predetermined value.

4. A system as claimed in any of claims 1 to 3 wherein said controller (124) is further effective to selectively communicate a third signal to said at least one electric machine (120) when said trailer (102) is at parking speeds, said third signal being effective to cause said at least one electric machine (120) to apply a positive torque to said axle assembly, thereby assisting in parking said trailer (102).

**5.** A system as claimed in any of claims 1 to 4 wherein said at least one electric machine (120) comprises a motor/generator.

**6.** A method for braking a towed vehicle (102) in which the method comprises the steps of providing a motor/generator (120), operatively coupling said motor/generator (120) to an axle assembly (108) of the towed vehicle, sensing a braking condition and selectively providing a negative torque to said axle assembly (108) in response to said sensed braking condition so as to assist in braking said towed vehicle (102) and to generate electrical power from the motor/generator (120).

**7.** A method as claimed in claim 6 further comprising the steps of monitoring a yaw rate of said towed vehicle (102) and selectively providing said negative torque to said axle assembly (108) based upon said yaw rate.

**8.** A method as claimed in claim 6 or in claim 7 the method further comprising the steps of operatively coupling a battery (122) to said motor/generator (120) and utilizing said generated electrical power to charge said battery (122).

**9.** A method as claimed in any of claim 6 to 8 further comprising the steps of sensing when said towed vehicle is at a parking speed and selectively providing a positive torque to said towed vehicle (102), effective to assist in parking said vehicle (102).

**Patentansprüche**

**1.** System (100) zum Bremsen eines Anhängers (102), welcher eine Achseneinheit (108) aufweist und von einem Fahrzeug gezogen wird, **dadurch gekennzeichnet, daß** das System wenigstens eine elektrische Maschine (120) beinhaltet, die mit besagter Achseneinheit (108) gekuppelt ist, wenigstens einen Sensor (128), welcher derart wirkt, daß er ein Merkmal des besagten Anhängers (102) mißt und ein erstes Signal erzeugt, welches besagtes gemessenes Merkmal darstellt, und eine Steuerung (124), welche in Kommunikation mit besagter wenigstens einer elektrischen Maschine (120) und besagtem Sensor (128) gekuppelt ist, wobei besagte Steuerung (124) derart wirksam ist, daß sie ein erstes Signal empfängt und ausgehend von dem besagten ersten Signal selektiv ein zweites Signal an besagte wenigstens eine elektrische Maschine (120) abgibt, wobei besagtes zweites Signal bewirkt, daß besagte wenigstens eine elektrische Maschine (120) ein Regenerativbremsmoment an besagter Achseneinheit (108) anlegt, so daß besagter Anhänger abgebremst wird und dabei elektrische Energie erzeugt wird.

**2.** System nach Anspruch 1, außerdem eine Batterie (122) beinhaltend, die operativ mit besagter wenigstens einer elektrischen Maschine (120) verbunden ist und derart wirksam ist, daß sie die besagte erzeugte elektrische Energie empfängt, wodurch besagte Batterie (122) nachgeladen wird.

**3.** System nach Anspruch 1 oder 2, in welchem das System außerdem eine Batteriesteuerung (126) beinhaltet, welche operativ mit besagter Steuerung (124) und mit besagter Batterie (122) verbunden ist, und welche derart wirksam ist, daß sie einen Ladezustand der besagten Batterie (122) überwacht und besagte Batterie (122) selektiv entlädt, wenn besagter Ladezustand einen bestimmten vorgegebenen Wert übersteigt.

**4.** System nach einem beliebigen der Ansprüche 1 bis 3, worin besagte Steuerung (124) des weiteren derart wirksam ist, daß sie selektiv ein drittes Signal an besagte wenigstens eine elektrische Maschine (120) abgibt, wenn sich besagter Anhänger (102) in einem Parkgeschwindigkeitsbereich befindet, wobei besagtes drittes Signal derart wirksam ist, daß es bewirkt, daß besagte wenigstens eine elektrische Maschine (120) ein positives Drehmoment an besagter Achseneinheit anlegt, so daß sie damit das Einparken des besagten Anhängers (102) unterstützt.

**5.** System nach einem beliebigen der Ansprüche 1 bis 4, worin besagte wenigstens eine elektrische Maschine (120) von einem Motorgenerator gebildet wird.

**6.** Verfahren zum Bremsen eines gezogenen Fahrzeuges (102), worin das Verfahren die Schritte aufweist, einen Motorgenerator (120) zu stellen, besagten Motorgenerator (120) operativ mit einer Achseneinheit (108) des gezogenen Fahrzeuges zu koppeln, eine Bremssituation zu erfassen, und in Reaktion auf besagte erfaßte Bremssituation selektiv ein negatives Drehmoment an besagter Achseneinheit (108) anzulegen, um so die Bremsung des besagten gezogenen Fahrzeuges (102) zu unterstützen und mit dem Motorgenerator (120) elektrische Energie zu erzeugen.

**7.** Verfahren nach Anspruch 6, außerdem den Schritt aufweisend, eine Giergeschwindigkeit des besagten gezogenen Fahrzeuges (102) zu überwachen, und ausgehend von besagter Giergeschwindigkeit besagtes negatives Drehmoment selektiv an besagter Achseneinheit (108) anzulegen.

**8.** Verfahren nach Anspruch 6 oder 7, welches Verfahren außerdem die Schritte beinhaltet, eine Batterie (122) operativ mit besagtem Motorgenerator (120) zu verbinden, und besagte erzeugte elektrische Energie zum Nachladen der besagten Batterie (122) zu verwenden.

9. Verfahren nach einem beliebigen der Ansprüche 6 bis 8, außerdem die Schritte beinhaltend, zu erfassen, wann sich besagtes gezogenes Fahrzeug in einer Parkgeschwindigkeit befindet, und selektiv ein positives Drehmoment an besagtem gezogenem Fahrzeug (102) anzulegen, das so wirkt, daß **dadurch** das Einparken des besagten Fahrzeuges (102) unterstützt wird.

## Revendications

1. Un système (100) pour freiner une remorque (102) qui comprend un assemblage d'essieu (108) et qui est remorquée par un véhicule, **caractérisé en ce que** le système comprend au moins une machine électrique (120) qui est couplée avec ledit assemblage d'essieu (108), au moins un détecteur (128) qui est efficace pour mesurer un attribut de ladite remorque (102) et pour produire un premier signal représentant ledit attribut, et un contrôleur (124) qui est couplé en communication avec ladite au moins une machine électrique (120) et ledit au moins un détecteur (128) de manière communicative, ledit contrôleur (124) étant efficace pour recevoir ledit premier signal et, sur la base dudit premier signal, pour communiquer sélectivement un deuxième signal à ladite au moins une machine électrique (120), ledit deuxième signal étant efficace pour causer l'application d'un couple de freinage régénératif à l'assemblage d'essieu (108) par ladite au moins une machine électrique (120), freinant ainsi ladite remorque (102) et produisant ainsi de l'énergie électrique.

2. Un système selon la revendication 1, comprenant en outre une batterie (122) qui est opérationnellement couplée avec ladite au moins une machine électrique (120) et qui est efficace pour recevoir ladite énergie électrique produite, rechargeant ainsi ladite batterie (122).

3. Un système selon la revendication 1 ou la revendication 2, dans lequel le système comprend en outre un contrôleur de batterie (126) qui est opérationnellement couplé audit contrôleur (124) et à ladite batterie (122) et qui est efficace pour surveiller un état de charge de ladite batterie (122) et à décharger sélectivement ladite batterie (122) si ledit état de charge excède une certaine valeur prédéterminée.

4. Un système selon l'une quelconque des revendications 1 à 3, dans lequel ledit contrôleur (124) est en outre efficace pour communiquer sélectivement un troisième signal à ladite au moins une machine électrique (120) lorsque ladite remorque (102) se déplace à des vitesses de stationnement, ledit troisième signal étant efficace pour causer l'application d'un couple positif audit assemblage d'essieu par ladite une machine électrique (120), assistant ainsi le stationnement de ladite remorque (102).

5. Un système selon l'une quelconque des revendications 1 à 4, dans lequel ladite au moins une machine électrique (120) comprend un moteur/générateur.

6. Procédé pour freiner un véhicule à remorque (102) dans laquelle le procédé comprend les étapes consistant à fournir un moteur/générateur (120), coupler opérationnellement ledit moteur/générateur (120) avec un assemblage d'essieu (108) du véhicule à remorque, détecter une condition de freinage et fournir un couple négatif audit assemblage d'essieu (108) de manière sélective en réponse à ladite condition de freinage détectée, afin d'assister le freinage dudit véhicule à remorque (102) et pour produire une puissance électrique à partir du moteur/générateur (120).

7. Procédé selon la revendication 6, comprenant en outre les étapes consistant à surveiller un taux d'embardée dudit véhicule à remorque (102) et à fournir ledit couple négatif audit assemblage d'essieu (108) de manière sélective en fonction dudit taux d'embardée.

8. Procédé selon la revendication 6 ou la revendication 7, la méthode comprenant en outre les étapes consistant à coupler opérationnellement une batterie (122) avec ledit moteur/générateur (120) et utiliser ladite puissance électrique produite pour charger ladite batterie (122).

9. Procédé selon l'une quelconque des revendications 6 à 8, comprenant en outre les étapes consistant à détecter lorsque ledit véhicule à remorque se déplace à une vitesse de stationnement et de fournir un couple positif audit véhicule à remorque (102) de manière sélective, efficace pour assister le stationnement dudit véhicule (102).

Fig. 1

EP 1 234 739 B1

Fig. 2

EP 1 234 739 B1

HYDRAULIC PUMP/VALVE ASSEMBLY

BRAKING CONTROLLER

BATTERY

DRIVER CONTROLS

HYDRAULIC PUMP/VALVE ASSEMBLY

BRAKING CONTROLLER

BATTERY

DRIVER CONTROLS

42 42 14 48 12 40 60 40

26 26 24 24

22 18 28 20 16

34 32

30 38 36

26 26 24 24

42 42 40 40

49

Fig. 3

EP 1 234 739 B1

Fig. 4

Fig. 5

BRAKING SIGNAL — 142

BATTERY STATE OF CHARGE — 144

CONTROLLER — 146
BS
DSC
WYS
WM1
WM2

140

BRAKING TORQUE — 152
Tb1  Tb2

ELECTRIC MOTOR 1 — 148
Tc1
Te1
wm1

ELECTRIC MOTOR 2 — 150
Tc2
Te2
wm2

TRAILER MODEL — 154
T_l
T_r

YAW SENSOR — 156
wy  wys

Fig. 6

Fig. 7